# EUROPÄISCHE PATENTSCHRIFT

(11) **EP 3 049 667 B1**
(45) Veröffentlichungstag und Bekanntmachung des Hinweises auf die Patenterteilung: **07.03.2018**
(21) Anmeldenummer: 14786123.1
(22) Anmeldetag: 25.09.2014
(51) Int. Cl.: F03B 13/00, F03D 9/00, F15B 21/14, F03B 17/00, H02J 15/00

(54) **VERFAHREN UND ANLAGE FÜR DIE KOMBINIERTE PUMPWASSERDRUCK-DRUCKLUFT-ENERGIESPEICHERUNG MIT KONSTANTEM TURBINEN-WASSERDRUCK**
METHOD AND SYSTEM FOR COMBINED PUMP WATER PRESSURE-COMPRESSED AIR ENERGY STORAGE AT CONSTANT TURBINE WATER PRESSURE
PROCÉDÉ ET INSTALLATION DE STOCKAGE D'ÉNERGIE COMBINÉ À AIR COMPRIMÉ ET À PRESSION D'EAU POMPÉE AYANT UNE PRESSION D'EAU DE TURBINE CONSTANTE

(30) Priorität: 25.09.2013 CH 16422013
(43) Veröffentlichungstag der Anmeldung: 03.08.2016
(73) Patentinhaber: Emil Bächli Energietechnik AG, 5304 Endingen (CH)
(72) Erfinder: BÄCHLI, Emil, CH-5304 Endingen (CH)
(74) Vertreter: Patentanwälte und Rechtsanwalt Weiß, Arat & Partner mbB
(86) Internationale Anmeldenummer: PCT/EP2014/002600
(87) Internationale Veröffentlichungsnummer: WO 2015/043747

(56) Entgegenhaltungen:
- WO-A2-2011/101647
- DE-A1-102007 062 502
- DE-A1-102011 106 040
- DE-A1-102012 015 732
- US-A- 4 206 608

## Beschreibung

Die Erfindung betrifft ein Verfahren für die kombinierte Pumpwasserdruck-Druckluft-Energiespeicherung mit konstantem Turbinen-Wasserdruck, sowie eine Anlage hierfür.

### Stand der Technik

Die weltweit steigende Nutzung von Sonnen- und Windenergie zur Stromerzeugung hat den Nachteil, dass sie unregelmässig anfällt und eben nicht immer zum Zeitpunkt, wenn sie gebraucht wird. Es fehlt eine preisgünstige Speichermöglichkeit mit gutem Wirkungsgrad und langer Lebensdauer, sowie guter Umweltverträglichkeit.

Die bisherigen Speichertechniken erfüllen diese Anforderungen noch zu wenig, mit Ausnahme der Speicherseen in den Alpen, deren Erweiterungspläne aber durch den Naturschutz laufend behindert werden. Die Pumpwasser-Energiespeicherung mit hochgelegenen Speicherseen ist momentan die effizienteste Art der Energie-Speicherung. Da es nicht viel Möglichkeiten gibt, hochgelegene Speicherseen zu erstellen und diese laufend Beschwerden verursachen, stellt sich die Frage, ob es nicht eine andere Möglichkeit gibt, Wasserdruck auch ohne Speicherseen zu erzeugen. Diese Möglichkeit gibt es, und wird schon seit Jahrzehnten in den sogenannten Hauswasserpumpen realisiert. Wirtschaftlich ist dies aber nicht relevant.

Aus der DE 10 2012 015 732 A1 ist ein Verfahren für die kombinierte Pumpwasserdruck-Druckluft-Energiespeicherung mit konstantem Turbinen-Wasserdruck bekannt, wobei mit der zu speichernden Energie ein flüssiges Medium, insbesondere Wasser, in einen druckfesten, luftdichten Hohlraum, insbesondere einen Druckbehälter, gepumpt wird, so dass ein steigender Mediumspiegel kolbenartig das im Druckbehälter befindliche Gas bis zur Medienbefüllung komprimiert, dieses durch eine Verbindungsleitung in einen Druckgasbehälter presst und mit einem Sperrventil abschliesst, so dass die Energie in dem Druckgas gespeichert wird. Ein konstanter Turbinen-Wasserdruck wird dabei dadurch erreicht, dass der Speicher für das Gas viel grösser dimensioniert ist als der Druckwasserbehälter und der Druckunterschied möglichst gross ist. Somit wird beim Ablassen des Wassers der Druck des Gases annähernd konstant bleiben.

Ebenfalls ist aus der WO 2011/101647 A2 ein Verfahren für eine kombinierte Pumpwasserdruck-Druckluft-Energiespeicherung mit konstantem Turbinen-Wasserdruck bekannt, wobei hier zusätzlich ein konstanter Turbinen-Wasserdruck dadurch erreicht wird, dass das Gas in zwei Phasen - flüssig und gasförmig - vorkommt, wobei der Verdampfungsdruck konstant ist und daher auch ein konstanter Gasdruck auf das Wasser einwirkt.

### Aufgabe

Es ist das Ziel der vorliegenden Erfindung, ein Speichersystem zu entwickeln, welches die obgenannten Anforderungen, wie auch die naturschützerischen Wünsche erfüllt.

### Lösung der Aufgabe

Zur Lösung der Aufgabe führen ein Verfahren und eine Anlage mit den Merkmalen der Ansprüche 1 und 2. Mit einer von einem Elektromotor angetriebenen Pumpe wird bevorzugt Wasser aber auch jedes andere flüssige Medium in einen druckfesten Behälter, der mit Luft oder einem entsprechenden Gas gefüllt ist, gepumpt. Der stetig ansteigende Wasserspiegel drückt die elastische Luft im Behälter immer mehr zusammen, sodass der Luftdruck stetig ansteigt und somit auch der Wasserdruck. Beim automatischen Abstellen der Pumpe auf einem bestimmten Druckniveau ist der Wasserdruck gespeichert.

Die elektrisch angetriebene Pumpe hat damit die elektrische Energie in potentielle Wasserdruck-Energie umgewandelt. Durch Wasserpumpen gegen ein Luftpolster in einem dicht geschlossenen Behälter, wie in der Hauswasserpumpe realisiert, kann somit Energie in Druckwasser mit Hilfe des Luftpolsters gespeichert und das Hochpumpen von Wasser, um Druck zu erzeugen, somit simuliert, also ersetzt werden. Dies allerdings mit dem grossen Nachteil, dass der Wasserdruck beim Ablassen von Wasser aus dem Druckbehälter, z.B. für den Antrieb einer Turbine, stetig abnehmen würde. Dies ist für die Umwandlung von potentieller Wasserdruckenergie in elektrische Energie ein grosses Problem.

Die vorliegende Erfindung hat zum Ziel, dieses Problem zu beseitigen und den Wasserdruck für die Umwandlung von potentieller in elektrische Energie auch beim Luftpolsterpumpwasser-Energiespeichersystem konstant auf gleicher Druckhöhe zu halten.

Erfindungsgemäss wird dies dadurch erreicht, dass der Druckbehälter z.B. durch eine druckfeste Zwischenwand dicht unterteilt wird, z.B. 1/2 Volumen als Wasser- und 1/2 als Luftteil. Die beiden Behälterteile werden mit zwei kommunizierenden Leitungen miteinander verbunden. Die erste Leitung mit einem schliessbaren Ventil und die zweite mit zwei Schliessventilen mit dazwischen angeordnetem Luftdruckreduzier-Ventil.

Vor Beginn der Energiespeicherung wird bei geöffnetem ersten Ventil in beiden Behälter-Teilen die Luft vorkomprimiert, auf z.B. 50 bar. Anschliessend wird der grössere Behälterteil mit der zu speichernden elektrischen Energie mittels Pumpe mit Wasser vollgepumpt. Mit steigendem Druck von anfänglich 50 bar presst das steigende Wasserniveau kolbenartig die Luft vollständig in den kleinen Luftbehälter und erreicht dort durch Volumenverkleinerung einen Druck von ca. 200 bar.

Ist die Wasserfüllung abgeschlossen, schliesst das erste Ventil die Verbindung zwischen Wasser- und Luftbehälter. Die elektrische Pump-Energie ist damit in potentielle Luftdruck-Energie umgewandelt und im kleinen Luftbehälter mit ca. 200 bar Luftdruck gespeichert. Für die Energierückgewinnung haben Luft-Turbinen einen schlechten Wirkungsgrad, weshalb die Druckluft gemäss der erfinderischen Idee auf reduzierten, konstanten Wasserdruck umgewandelt wird. Dieser wird auf z.B. 50 bar reduziert. Dies wird mit einem Gasdruck - Reduzierventil, das zwischen den zwei Sperrventilen montiert ist, erreicht, das den kleinen Luftdruckbehälter mit dem grossen Wasserbehälter luftzirkulierend verbindet. Der eingangsseitige Luftdruck am Reduzierventil beträgt anfänglich 200 bar und ist arbeitsseitig auf 50 bar eingestellt. Nach Inbetriebnahme der Wasser-Turbine zur Energie-Rückgewinnung nimmt das Wasserniveau im grossen Wasserbehälter stetig ab, und zwangsläufig sinkt auch der Luftdruck. Dieser wird aber durch die nachfliessende Luft aus dem Reduzierventil laufend nachgebessert, das auf 50 bar eingestellt ist, sodass bis zu einer Restmenge die gesamte Wassermenge im Wasser-Druckbehälter mit konstantem Wasserdruck von 50 bar die Wasserturbine mit Generator mit höherem Wirkungsgrad antreibt, als es direkt mit Druckluft über eine Gasturbine möglich wäre.

Mit dieser Lösung wird die Konstanthaltung des Wasserdrucks von Speichersee-Kraftwerken eher noch übertroffen, deren Wasserdruck sich bei leerem und vollem Stausee durch die Staumauerhöhe verändert.

Die Wassermengen-Regulierung ist in den Turbinen integriert, z.B. bei den Pelton-Turbinen durch Verstellung der Nadelventile.

Energievernichtende Lufterhitzungsprobleme, wie bei den Druckluft-Energiespeicheranlagen auch infolge der starken Luftdurchwirbelung in Kolben- und Turbokompressoren bis 1000° C, gibt es bei der vorliegenden Speichermethode gemäss der Erfindung nicht, da die Luft nicht durch schnell laufende Kolben - und Turbinenschaufeln durcheinandergewirbelt komprimiert wird, sondern sehr ruhig durch den langsam ansteigenden Wasserspiegel im Druckbehälter. Die Berührungsfläche zwischen Wasser- und Luft ist sehr gross, sodass die entstehende Lufterwärmung durch Kompression vom Wasser sofort abgekühlt wird. Eine zusätzliche Kühlmöglichkeit der sich erwärmenden Luft besteht darin, dass die Wasserzuführung in den Wasserdruckbehälter nicht von unten erfolgt, sondern von oben über ein gelochtes Rohr, sodass das eingepumpte Wasser durch die sich erwärmende Luft plätschert und diese abkühlt. Zur Kühlung der sich erwärmenden Luft kann auch ein wenig Wasser zerstäubt werden.

Diese kombinierte Pumpwasserdruck-Druckluft-konstante-TurbinenwasserDruck-Energiespeicherung mit Wirkungsgraden bis 80% ist den neuen Forschungsprojekten einer Luftdruck-Energiespeichertechnik mit Wärmespeicher und Wärmerückgewinnung mit erwünschtem 70%igen Wirkungsgrad weit überlegen, dies auch wirtschaftlich, da Wasserturbinen und Wasserpumpen mit Wirkungsgraden über 90% preisgünstiger sind als Turbokompressoren und Gasturbinen mit einem bedeutend schlechteren Wirkungsgrad. Zudem können die hohen Kosten eines noch sehr schwierig zu entwickelnden Wärmespeichers bis 600 °C mit druckfester Isolation bis 100 bar eingespart werden.

Die Speicherkapazität des Pumpwasser-Druckluft-Speichersystems mit konstantem Turbinenwasser ist beachtlich. Mit betonarmierten Hochdruckrohren mit 2000 Liter Inhalt und Druckluft von 1000 bar resultiert eine Stromspeicherkapazität von ca. 30 kwh.

Nach beendeter Energierückgewinnung stellt sich die anfängliche Luftkomprimierung des stationären Druck der Vorkomprimierung von 50 bar in beiden Druckbehältern von 50 bar wieder ein. Die Vorkomprimierung hat den Vorteil, dass nicht bei jedem Speicherzyklus ab Atmosphärendruck Wasser gepumpt werden muss.

Vorteilhaft bleibt im Druckwasserbehälter immer eine Restwassermenge bestehen, damit der stationäre Luftdruck von z.B. 50 bar erhalten bleibt.

Die Höhe der Vorkomprimierung der Luft in den Druckbehältern sowie der nachfolgende Betriebsdruck in bar ist abhängig von der Behälterdruckfestigkeit. Je höher der Druck und je grösser das Behältervolumen ist, desto mehr Energie kann gespeichert werden. Die Druckfestigkeit der Druckbehälter muss ca. das Doppelte des höchsten Betriebsdrucks betragen und kann periodisch durch eine einfache Wasserdruckprüfung überwacht werden.

Das Grössenverhältnis des Wasserdruckbehälters zum Luftdruckbehälter ist auch bestimmend für den Luftdruck. Ist der Wasserdruckbehälter z.B. gleich gross wie der Luftdruckbehälter, steigt der Druck in letzterem auf das 2- fache, von 50 auf 100 bar.

Mit einem Flüssigkeits-Druckreduzier-Ventil, vor der Wasserturbine eingebaut, wäre diese Druckreduktion auf 50 bar auch möglich, jedoch ginge die höher gespeicherte Wasserdruckenergie über 50 bar total verloren, da Wasser sein Volumen durch Druckreduktion nicht vergrössern kann wie Luft.

Dieses umweltfreundliche Speichersystem, das im Boden oder im Wasser oder in Felsentunnels nicht sichtbar ist, ist es auch nicht Beschwerden ausgesetzt wie Speicherseen. Mit dem Bau dieser Speicher überall an neuralgischen Punkten mit Überschussstrom oder Strommangel können geplante Hochspannungs-Leitungen total oder teilweise eingespart werden.

Um Speicherwasser zu sparen in Gegenden mit Wassermangel, können, wie oben schon erwähnt, auch zwei Speicheranlagen nebeneinander gebaut werden, indem das Speicherwasser von einer Anlage zur andern wechselt. Das von der Energierückgewinnung freiwerdende Wasser der einen Anlage dient gleichzeitig zur Energiespeicherung der andern Anlage. Daraus resultiert eine beachtliche Wassereinsparung. Ein Ausgleichsreservoir zwischen beiden Anlagen stellt sicher, dass immer genügend Wasser vorhanden ist. Ein grosses Wasserbecken für die Total-Wassermenge kann durch diesen Duo-Betrieb eingespart werden. Der Vorteil dieses wechselseitigen Betriebs liegt auch darin, dass sehr schnell von Speichern auf Speicherrückgewinnung umgestellt werden kann. Für diesen wechselseitigen Speicherbetrieb können auch mehr als zwei Anlagen zusammenkombiniert werden.

Auch hier wird vor Beginn der Energiespeicherung in beiden Behälterteilen die Luft vorkomprimiert, auf zum Beispiel 50 bar. Für diese Komprimierung benötigt es keinen Luftkompressor, dieser kann eingespart werden, indem die Luft mit viel höherem Wirkungsgrad ohne Lufterhitzungsprobleme mit dem Wasserkolbensystem gemäss der vorliegenden Erfindung komprimiert wird. Um dies zu erreichen, wird der leere Druckwasserbehälter mit Wasser vollgepumpt und die Luft über ein geöffnetes Schliessventil in den Druckluftbehälter gepresst.

Bei vollem Wasserbehälter wird das Schliessventil zum Druckluftbehälter geschlossen. Da der benötigte Druck im Luftbehälter mit einem Wasserkolbenhub noch nicht erreicht ist, muss der Wasserpumpvorgang wiederholt werden. Zu diesem Zweck wird das Wasser im Wasserbehälter, welches durch ein Sperrventil vom Druckluftbehälter getrennt ist, durch ein Verbindungsrohr zum drucklosen Wasservorratsbehälter über ein geöffnetes Sperrventil abgelassen. Erneut wird dieses Wasser wieder in den gleichen Druckwasserbehälter gepumpt und durch den steigenden Wasserspiegel kolbenartig die Luft in den Luftbehälter gepresst. Dies wird so oft wiederholt, bis der vorgesehene Luftdruck erreicht ist. Da der Vordruck im leeren Druckwasserbehälter und Druckluftbehälter 50 bar betragen soll, muss die Luft im Druckbehälter vorerst auf das Doppelte, also auf 100 bar komprimiert werden. Durch Öffnen des Sperrventils zum zuvor geleerten Wasserbehälter strömt Druckluft von 100 bar in diesen, so dass sich die Druckluft in beiden Behältern auf 50 bar einstellt.

Beim Energiespeichersystem gemäss Erfindung hängt die erreichbare Energiespeicher-Menge nicht nur von der Grösse der dichten, druckfesten Hohlräume oder Druckgefässe ab, sondern auch von der erreichbaren Druckfestigkeit. Nach dem Stand der Technik rechnet man bei ausgedienten Bergwerken und Felsentunnels mit 50 - 100 bar, bei Standart Pipeline-Rohren mit 1 m Durchmesser bis 200 bar, speziell bis 300 bar. Mit betonstahlarmierten Speicherrohren gemäss der Erfindung sind Druckfestigkeiten weit über 1000 bar realisierbar, wobei die Prüfdruckfestigkeit den doppelten Wert erreichen muss. Diese hohen Drücke werden für die Energiespeicherung kein Sicherheitsproblem darstellen, da die Industrie in Tausenden von Anlagen für andere Zwecke mit Wasser bis 4000 bar arbeitet und auch Hochdruckreiniger bis 1000 bar in Betrieb sind. Auch Hochdruck-Wasserpumpen mit bis 4000 bar mit Wirkungsgraden über 90 % sind im Handel erhältlich.

Mit beispielsweise 1000 bar Speicherdruck und mittels einem LuftdruckReduzierventil, gemäss der Erfindung die Turbine mit einem Wasserdruck von 50 bar anzutreiben, braucht es ca. die 10- fache Wassermenge des Inhalts des Druckluftspeichers von 1000 bar. Mit einer Druckluftspeichergrösse von z.B. 1.200 Liter Inhalt müsste ein Druckwasserspeicher mit ca. 12.000 Liter Inhalt zur Verfügung stehen, was sehr unwirtschaftlich ist.

Es ist auch Aufgabe dieser Erfindung eine Lösung zu finden, um die Wassermenge von 12.000 Liter mit 50 bar auf 1.200 Liter 50 bar + ca. 2.000 Liter drucklos zu reduzieren. Dies wird dadurch erreicht, dass mit zwei Wasserbehältern vorzugsweise mit gleichem Inhalt und gleicher Druckfestigkeit, wie der Druckluftbehälter, abwechselnd der eine unter Luftdruck von 50 bar die Turbine mit Druckwasser mit konstantem Druck von 50 bar antreibt, während der andere Behälter, von der vorherigen Turbinenspeisung beinahe leere Wasserbehälter, gleichzeitig mit Wasser aus dem drucklosen Wasserbehälter mittels Pumpen gefüllt wird. Durch die Pumpwasserfüllung wird der Luftvordruck von 50 bar im leeren Wasserbehälter kolbenartig durch Öffnen des Ventils beim Druckluftbehälter zurückgewonnen und es geht so nichts verloren. Durch diesen wechselseitigen Betrieb im Rundlauf steht aus dem drucklosen Wasserbehälter von ca. 2.000 Liter Inhalt unendlich viel Pumpwasser zur Verfügung durch das nachfliessende Turbinenabwasser.

Mit 100 % luftdichten Druckbehältern ist eine Energiespeicherung ohne Verluste über Monate möglich, im Gegensatz zu Batteriespeichern, die laufend Stillstand-Verluste aufweisen. Zudem ist Wasser als Speichermedium unendlich umweltfreundlicher als die giftigen Stoffe in den Batterien.

Hauptbestandteil des neuen Speichersystems sind die Druckbehälter, die um ein mehrfaches länger haltbar sind als Batteriespeicher, was sich auf die Speicherkosten pro KWh positiv auswirkt.

Die für die Überdrucksicherung, Ladung und Entladung des Energiespeichers erforderlichen Komponenten, sowie die Wassermengen-Regulierung für die Drehzahl- und Leistungsregulierung der Turbine mittels Ventilen und sämtliche Steuer- und Überwachungsorganen sind Rechner- und Prozess gesteuert. Die Überdruck-Sicherung wird von mindestens zwei unabhängigen Systemen sichergestellt. Mit einem Notschalter kann die Luft im Druckluftbehälter über ein Ventil mit Rohr nach oben sofort entleert und die Anlage in kurzer Zeit ohne Wasserentleerung drucklos gemacht werden, sodass gefährliche Überschwemmungskatastrophen, wie bei einem Staumauerbruch, ausgeschlossen sind.

Damit kein Wasser vom Wasserdruckbehälter in den Druckluftbehälter gelangen kann, ist bei der Ausgangsöffnung des Wasserdruckbehälters ein Wassersperrventil angebracht. Beim Eingang des Pumpendruckwassers in den Druckwasserbehälter wird vorteilhaft ein Rückschlagventil montiert.

Für die Realisierung einer Pumpwasserdruck- Luftpolster- Energiespeicherung sind die meisten Komponenten wie Pumpen, Turbinen, Generatoren, Sicherungsorgane, Netzanpassungen usw. bereits entwickelt und bei den Speicher-Seekraftwerken bereits Stand der Technik. Diese können durch Grössen - und Leistungsanpassungen übernommen werden. Hingegen sind Speicherwasserbehälter für sehr hohe Drücke, welche Speicherseen in kleinerem Massstab ersetzen sollen, ein noch zu lösendes Problem. Es ist Aufgabe dieser Erfindung, möglichst preisgünstige Lösungen von Hochdruckbehältern zu entwickeln oder geeignete, ganz andere technische Anwendungen für die vorliegende Energiespeicherung zu finden und dafür anzuwenden.

Grundsätzlich eignen sich rohrförmige Behälter, also rostfreie Rohre, die an beiden Enden dicht verschlossen sind, für hohe Drücke am besten. Je grösser der Rohrdurchmesser ist, desto grösser muss dessen Wandstärke sein. Dickwandig rostfreie Rohre sind aber sehr teuer. Deshalb wird vorgeschlagen, dünnwandige Rohre mit stahlarmiertem Spezialbeton zu umgeben und so zu verstärken, denn Armierungs-Stahl ist ca. 6 x kostengünstiger als Edelstahl. Je nach erforderlicher Druckfestigkeit wird spiralförmig aufgewickelter Armierungsstahl ein- oder mehrlagig über das zu verstärkende Rohr geschoben, um die radialen Druckkräfte aufzuheben. Um die axialen Druckkräfte aufzuheben, werden die beiden Rohrendverschlüsse mittels Armierungsstahl miteinander verbunden. Sie sind rings am Umfang des Rohres, zwischen rohr- und spiralförmiger Armierung längs angeordnet und mit den dichten Rohrabschlüssen fest verschweisst. Mit dieser Konstruktion können Hochdruckbehälter mit kleinem Rohrdurchmesser bis über 1000 bar Druckfestigkeit realisiert werden. Ein oder mehrere miteinander verbundene derart stahlarmierte Rohre werden mit einer Schalung versehen und mit einem hochdruckfesten Beton einbetoniert. Mit einem druckfest armierten Betonmantel umgebene Speicherrohre sind speziell gut vor Korrosion geschützt, sei es für Erd- oder Wasserverlegung. Aus einer möglichen Dauerhaftigkeit von über 60 Jahren resultiert eine wirtschaftlich preisgünstige Energiespeicherung.

Die Speicherrohre können nicht nur horizontal, sondern auch vertikal in einem Erdbohrloch oder auch in ausgedienten Erz-, Kohle-, usw. Bergwerken aber auch in Tunnel oder Stollen platziert werden.

Die Drucksicherheit der Speicherrohre lässt sich mit einem normalen Wasserdruck-Prüfgerät jederzeit überprüfen. Sehr gut als Hochdruck-Speicherrohre eignen sich Rohre aus einer völlig anderen technischen Anwendung, nämlich von den Gas- und Öl-Pipelines. Sie haben eine Druckfestigkeit bis 200 bar. Mit einem Durchmesser bis über einem Meter können auch grössere Luftpolster-Pumpwasser-Energiespeicher realisiert werden.

Mit Pipelines für Gas und Öl unter der Erdoberfläche oder durch Meere verlegt, bestehen schon langjährige Erfahrungen. Diese sind bei der Umnutzung dieser Pipelinerohre zur Wasserdruck-Energiespeicherung sehr wichtig und wertvoll. Aufgrund ihrer Bewährung betreffend Korrosion im Meerwasser, können Pumpspeicher bedenkenlos auch an Meeresstränden unter Wasser realisiert werden zur Speicherung z.B. der Windenergie. Auch leerstehende Tunnels- und Stollen, sowie ausgediente Bergwerke usw., sofern diese nicht luftdicht zu machen sind, können diese mit an den Enden verschlossenen Pipeline-Rohren, in diesen platziert und als Luftpolster-Wasserdruckenergiespeicher benutzt werden.

Zur Gewichtseinsparung, z. B. für Energiespeicherung für Fahrzeuge, können als Druckbehälter auch faserverstärkte Kunststoffe verwendet werden. Für grosse Energiespeicher-Volumen eignen sich auch ausgediente oder der Bau neuer Tunnels in z.B. kompakten Granit- oder Kalkfelsen mit einer Fels-Überdeckung von mehreren hundert Metern. Die Innenflächen des Tunnels sind mit einem luftdichten Belag abzudichten. Der separate Luftdruckspeicher mittels z.B. einer an den Enden verschlossenen Pipeline-Röhre kann längs im wassergefüllten Tunnel platziert werden.

Die neue Energiespeicherung nach der vorliegenden Erfindung ergibt überraschende Wirkungsgradverbesserungen und massive Kostensenkungen bei Windkraftanlagen durch kraftschlüssigen Direktantrieb vom Windrad mittels Winkelgetriebe über Welle mit der Hochdruck- Wasserpumpe für die Energiespeicherung. Der direkte Weg vom Windrad zur HochDruckwasserpumpe unter Weglassung des stromerzeugenden Generators und des Pumpenantriebmotors ergeben erstens eine Wirkungsgradverbesserung von ca. 20 % und zweitens eine nicht für möglich gehaltene Kostensenkung für den Bau von Wind- Kraftanlagen. Diese Einsparung beträt ca. 1/3 der Gesamtkosten einer Windturbine. Ohne jegliche Stromerzeugung und komplizierte elektronische Frequenz - Stabilisierungs- Einrichtungen auf hohem Turm mit teuren Wartungskosten, das alles braucht es jetzt nicht mehr.

Die Verwendung einer Hochdruck-Kolbenwasserpumpe hat zudem den Vorteil, dass Sie bei jeder Drehzahl ob hoch oder niedrig den gleich hohen Wirkungsgrad über 90 % aufweist. Dies hat den Vorteil , dass die übliche Drehzahlstabilisierung eines Windrades sich erübrigt, was einer weiteren Kostensenkung gleichkommt.

Ein weiterer Kostenvorteil entsteht dadurch, dass die Windturbine direkt über dem untererdigem Betonbau der Speicheranlage steht und dieser Betonbau als Fundament dient, sodass ein übliches Fundament für den Turm einer Windturbine eingespart werden kann. Zudem kann der druckfeste Hohlraum des Turmes für die Druckwasser oder- Druckluftspeicherung genutzt werden.

Mit dieser Neuerung dürfte die Windenergie zur mit Abstand preisgünstigsten Stromerzeugung aufsteigen, noch mit Vorteil, dass mit der verbundenen Energiespeicherung auch bei Windstille Strom erzeugt werden kann. Die Kosteneinsparungen bei der Erstellung neuer Windkraftanlagen gemäss Erfindung ohne Generator und Elektronik ist in der Grössenordnung so, dass damit die Speicher teilweise oder ganz finanziert werden kann.

Durch den Bau von Windkraftanlagen mit der neuen Energiespeicherung entsteht ein weiterer grosser Vorteil der Netzstabilisierung, sodass auf neue Hochspannungsleitungen teilweise oder ganz verzichtet werden kann.

Die neue Pumpwasserdruck- Druckluft - Energiespeicherung gemäss Erfindung mit einem Wirkungsgrad von ca. 80 % hat den Vorteil, dass der Turbinenwasserdruck bei der Energierückgewinnung immer konstant auf gleicher Höhe bleibt, dies ob der Wind stark oder schwach oder gar nicht weht.

Anstelle einer Einzelwindturbine mit zugehörigem Speicher, kann es vorteilhaft, sein eine Gruppe von Windturbinen ohne Generator, jede nur mit einer Hochdruckpumpe ausgerüstet und kommunizierend mit einem zentralen Energiespeicher zusammenfassen.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Fig. 1** eine schematische Darstellung einer erfindungsgemässen Energie-Speicherung von unregelmässig anfallenden Wind-, Solar- oder andern Energien;
**Fig. 2a** **und** **2b** schematische Darstellungen jeweils einer Ausführungsform einer erfindungsgemässen Energiespeicherung in wechselseitigem Betrieb von zwei Speicher-Anlagen;
**Fig. 3a** - **3c** schematische Darstellungen von drei Varianten der Platzierung von Druckluftbehältern;
**Fig. 4** **a und b** einen teilweise dargestellten Längsschnitt und einen Querschnitt entlang Linie A-A durch ein dünnwandiges Rohr als Druckwasserbehälter;
**Fig. 5** eine erfindungsgemässe schematische Darstellung einer EnergieSpeicheranlage für ein Zweifamilienhaus mit Dachsolaranlage ;
**Fig. 6** eine erfindungsgemässe schematische Darstellung einer grossen Energiespeicheranlage in einem Felsentunnel angrenzend an einen See oder Staubecken;
**Fig. 7** eine erfindungsgemässe schematische Darstellung einer Windkraft-Energie-Speicherung mit Pipeline Rohren - oder betonumhüllten Speicherrohren, vertikal in einem Bohrloch;
**Fig. 8** eine erfindungsgemässe schematische Darstellung einer Windkraft-Energie-Speicherung mit Pipeline Rohren oder hochdruckfesten, betonumhüllten Druckwasserbehälter- Rohren, die horizontal in der Erde verlegt sind.

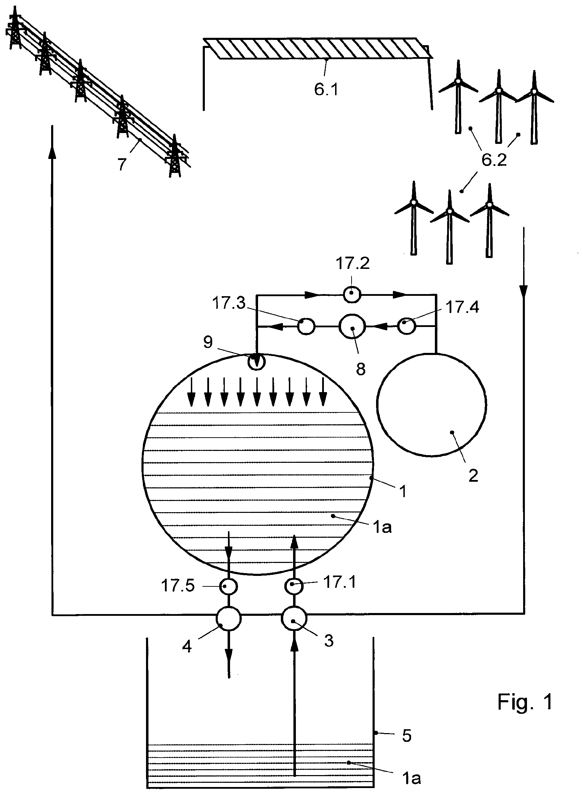

Gemäss Figur 1 befindet sich in einem Druckwasserbehälter 1 Speicherwasser 1a. Dieses Speicherwasser 1a wird mittels einer Hochdruck-Wasserpumpe 3 mit Motor über ein Schliessventil 17.1 in den Druckwasserbehälter 1 eingespeist.

Die entsprechende Energie für die Hochdruck-Wasserpumpe 3 stellt ein Solarpanel 6.1 oder Windpark 6.2 zur Verfügung.

Der Druckwasserbehälter 1 ist kommunizierend und trennbar mit einem Druckluftbehälter 2 verbunden. Hierzu sind in den entsprechenden Leitungen entsprechende Ventile eingeschaltet. Zum Druckwasserbehälter 1 hin befindet sich in der Leitung ein Wassersperr-Sicherheitsventil 9, welches gewährleistet, dass kein Wasser, sondern nur Luft in den Druckluftbehälter 2 gelangt. Danach folgt zum Druckluftbehälter 2 hin ein weiteres Schliessventil 17.2. In einem Bypass zurück ist ein Druckluft-Reduzierventil 8 vorgesehen, dem beidseits ebenfalls Schliessventile 17.3 und 17.4 zugeordnet sind. Mit 23 sind Überdruckventile gekennzeichnet.

Mit dem Speicherwasser 1a aus dem Druckwasserbehälter 1 kann, wiederum trennbar über ein Schliessventil 17.5, eine Wasserturbine 4 mit Generator versorgt werden. Die entsprechende erzeugte Energie wird in ein Netz 7 eingespeist.

Die Funktionsweise der vorliegenden Erfindung ist beispielsweise wie folgt:
Mittels einer elektrisch angetriebenen Hochdruckpumpe 3 wird Wasser aus einem Wasserbehälter 5 in einen Druckwasserbehälter 1 mit auf 50 bar vorkomprimierter Luft gepumpt. Der Druckwasserbehälter 1 ist kommunizierend trennbar verbunden mit dem Druckluftbehälter 2, in den die im Druckwasserbehälter durch Wasserfüllung verdrängte Luft gepresst wird. Ist das Volumen im Druckluftbehälter 2 vier x kleiner als im Druckwasserbehälter 1, steigt der Druck im Druckluftbehälter 2 auf 4 x 50 = 200 bar. Durch Schliessen eines Ventils 17.2 ist die Energie im kleinen Druckluftbehälter 2 mit 200 bar Druckluft gespeichert. Da ein Arbeitwasserdruck der Turbinen z.B. 50 bar beträgt, wird die Druckluft von 200 bar mit einem Druckluft- Reduzierventil 8 auf 50 bar Arbeitsdruck eingestellt.

Durch Öffnen von zwei Schliessventilen 17.3 und 17.4 fliesst die Druckluft von 200 bar durch das Reduzierventil 8 mit 50 bar in den wassergefüllten Druckwasserbehälter 1, sodass die gesamte Wassermenge bis auf eine Restwassermenge mit konstantem Druck von 50 bar die Turbinen antreiben. Der sinkende Wasserspiegel im Druckwasserbehälter 1 einhergehend mit sinkendem Luftdruck, wird durch das auf 50 bar eingestellte Druckreduzierventil 8 laufend auf 50 bar nachgebessert.

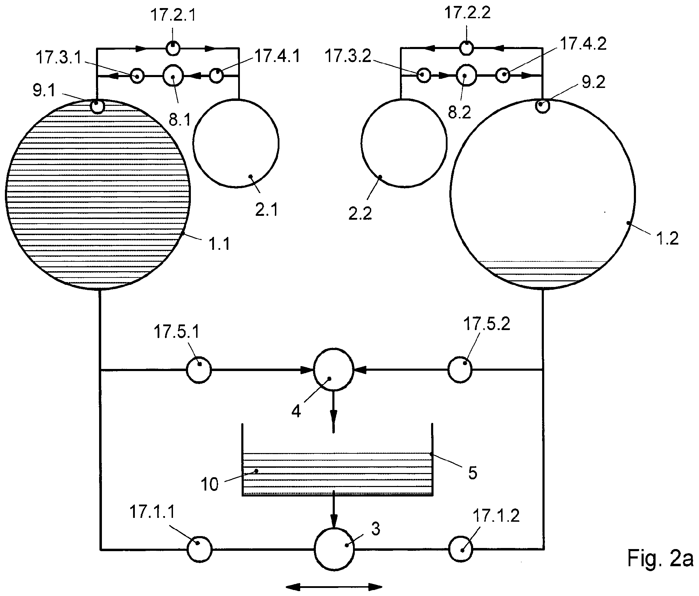

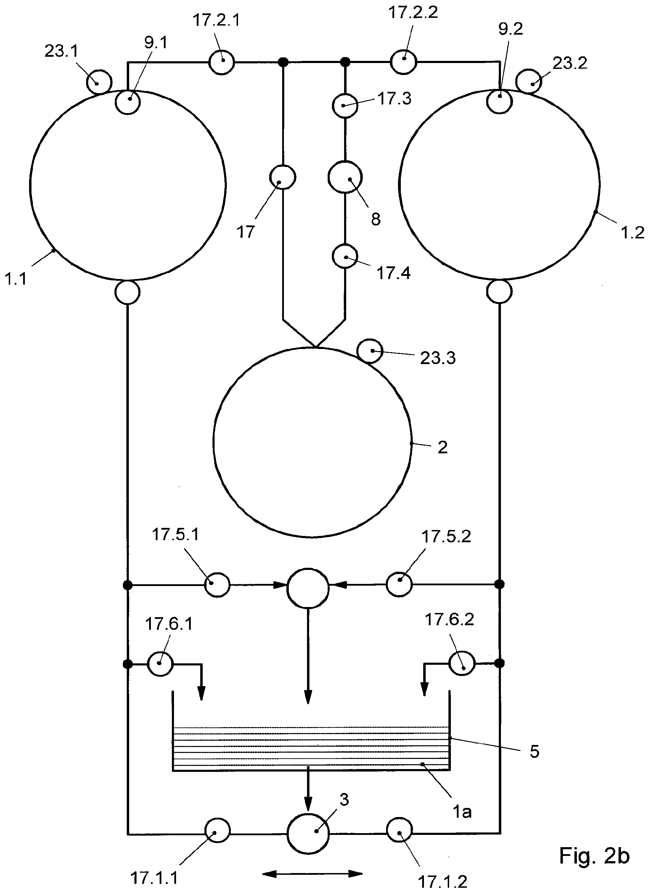

Gemäss Figur 2 ist eine erfindungsgemässe Energiespeicherung in wechselseitigem Betrieb von zwei Speicher-Anlagen 1.1 und 1.2 dargestellt. Während die linke Anlage 1.1 zur Energiespeicherung mit Wasser bepumpt wird, gibt die rechte Anlage 1.2, bei der Energie rückgewonnen wird, jetzt Wasser frei, welches die linke Anlage benötigt. Ein gemeinsames Wasser-Ausgleichbecken 5 stellt sicher, dass immer genügend Wasser vorhanden ist. Ein grosses Wasserbecken für die gesamte Wassermenge kann eingespart werden.

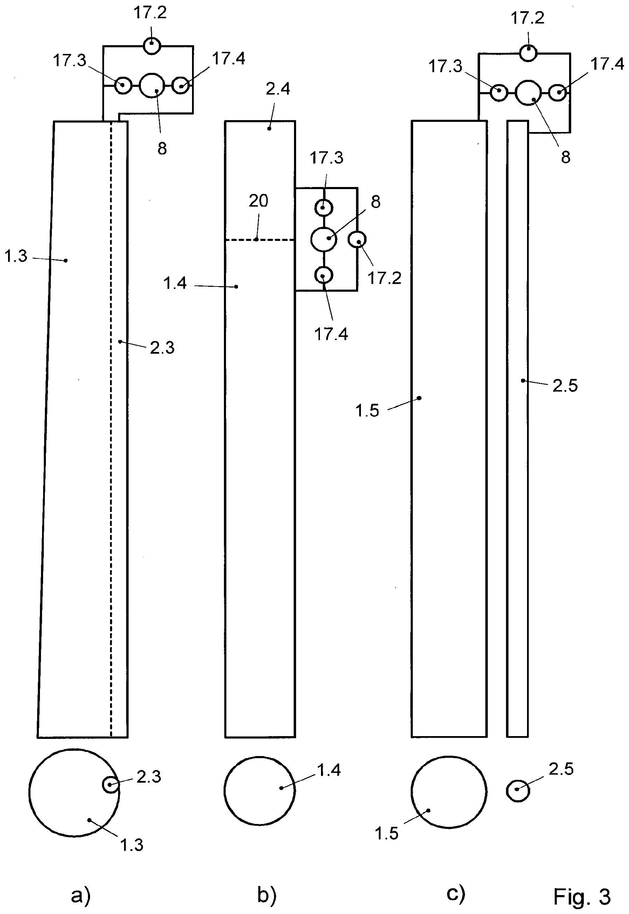

In der Figur 3a ist der kleinere Druckluftbehälter 2.3 im grossen Druckwasserbehälter 1.3 eingebaut.

In der Figur 3b ist in einem Druckwasserbehälter 1.4 eine druckfeste, dichte Zwischenwand 20 eingebaut. Das grössere Abteil bildet den Druckwasserbehälter 1.4 und der kleinere den Druckluftbehälter 2.4.

In der Figur 3c ist der Druckluftbehälter 2.5 ausserhalb des Druckwasserbehälters 1.5 platziert.

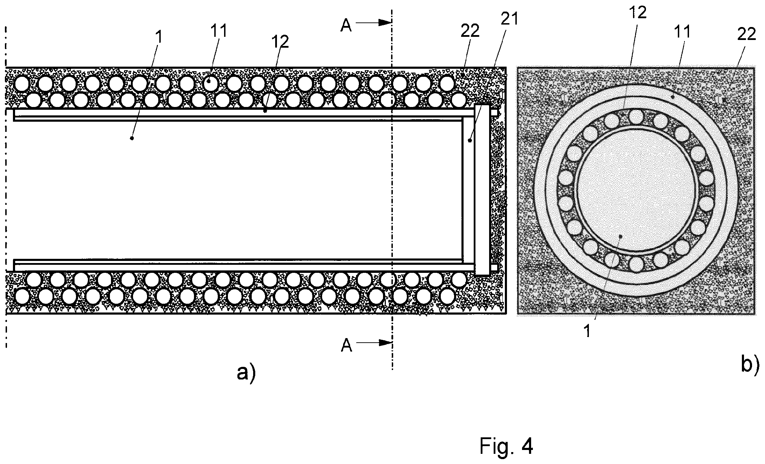

Gemäss Figur 4 ist dargestellt, wie ein dünnwandiges Rohr als Druckwasserbehälter 1 mit einem stahlarmierten Betonmantel hochdruckfest gemacht werden kann. Betonstahl 11 wird spiralförmig aufgewickelt und über das Rohr geschoben, einlagig oder mehrlagig, je nach geforderter Druckfestigkeit. Mit dieser Rohrumwicklung mit Armierungsstahl sind die radialen Druckkräfte aufgefangen. Zur Abstützung der axialen Druckkräfte sind rings um das Rohr Armierungs-Stahl-Stangen 12 angeordnet und mit Rohrabschlussplatten 21 fest verschweisst. Das Ganze wird mit einer Schalung umschlossen, und mit hochdruckfestem Beton 22 gefüllt und vibriert, damit keine Hohlräume mehr vorhanden sind.

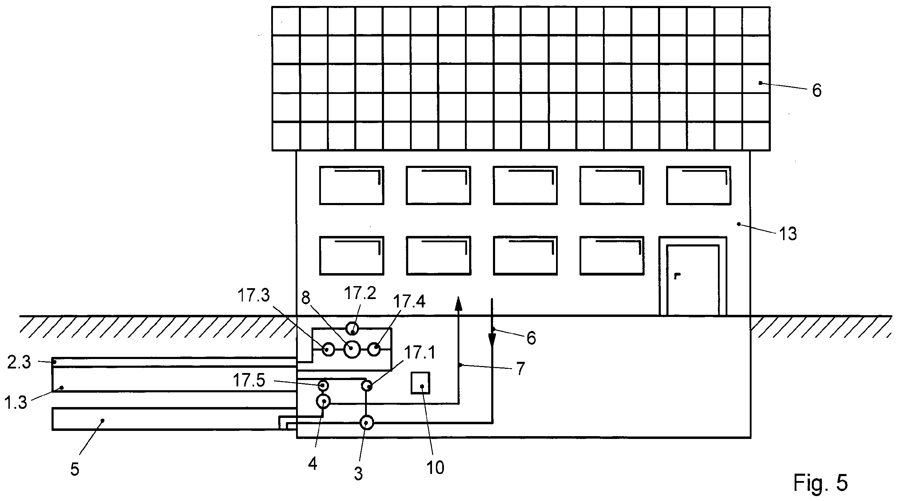

Figur 5 zeigt eine Energiespeicheranlage für ein Zweifamilienhaus 13 mit Dachsolaranlage 6 mit Druckspeicherrohren, betonumhüllt im Erdreich ausserhalb des Hauses, wodurch im Kellerraum sehr wenig Platz benötigt wird. Die Figur zeigt ferner einen in der Erde platzierten Druckwasserbehälter 1.3 mit integriertem Druckluftspeicher 2.3. Der drucklose Vorratsbehälter 5 befindet sich unter dem Druckwasserspeicher 1.3 mit Anschluss der Hochdruckwasserpumpe 3 für die Befüllung des Speicherbehälters 1.3, sowie des Turbinen-Generators 4 für den Wasserrückfluss der in der Turbine rückgewonnenen Energie aus dem Druckwasserspeicher. Die Überdrucksicherheits-Vorrichtungen sowie ein automatische Betriebssystem 10, rechner- und prozessgesteuert,sind nur schematisch angedeutet.

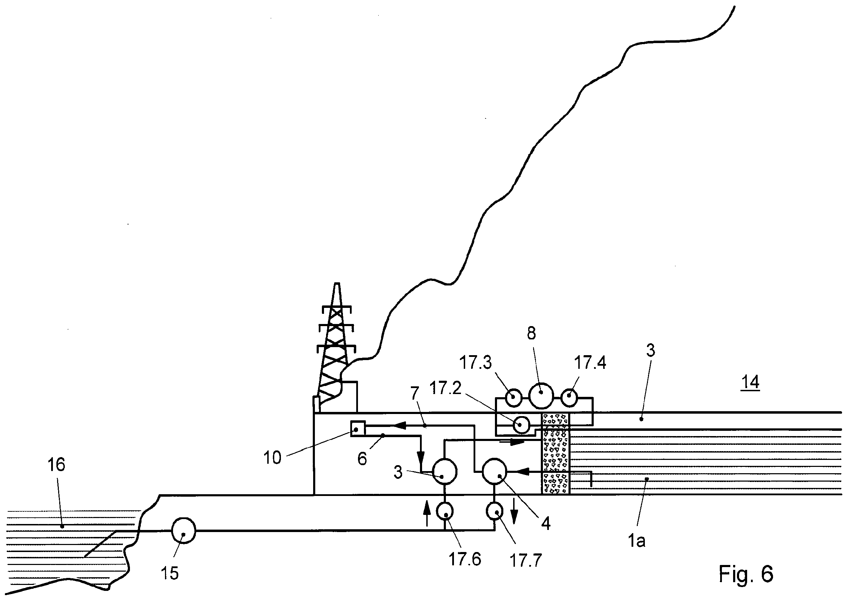

Figur 6 zeigt eine grosse Energiespeicheranlage in einem Felsentunnel 14 angrenzend an einen See 16. Die Wasserzuleitung zur Hochdruckwasserpumpe 4 ist mit einem Filter 15 ausgerüstet, der durch das rückfliessende Wasser von dem stromerzeugenden Turbinen-Generator 4 immer wieder gereinigt wird.

Der Zufluss- und Abfluss des Speicherwassers ist durch zwei Ventile 17.6 und 17.7 geregelt. Die ankommende Stromleitung liefert abwechselnd ÜberschussStrom zur Speisung der Hochdruckwasserpumpen 3 oder wird bei Strommangel gespiesen von der gespeicherten Wasserhochdruck-Energie durch Entspannung in dem stromerzeugenden Turbinen-Generator 4. Die Überdruck-Sicherheitsvorrichtungen sowie das automatische Betriebssystem 10 sind rechner- und prozessgesteuert.

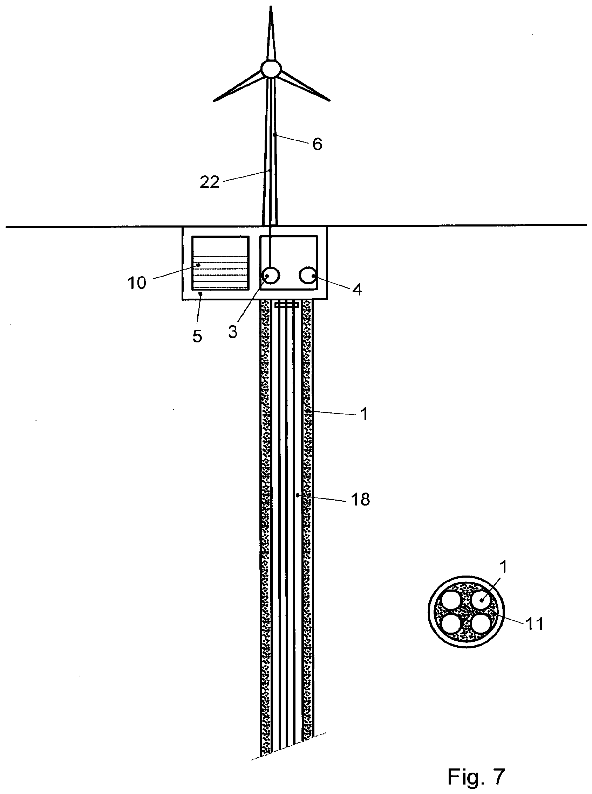

Figur 7 ist eine erfindungsgemässe schematische Darstellung einer Energie-Speicherung mit Pipeline Rohren - oder betonumhüllten Speicherrohren 18, vertikal in einem Bohrloch. Dabei sitzt die Windkraftanlage 6 bevorzugt direkt auf der Einheit aus Druckwasserbehälter bzw. Vorratsbehälter 5 und Gehäuse für die Wasserpumpe 3 und die Turbine 4 auf. Hierdurch wird ein eigenes Fundament für die Windkraftanlage 6 eingespart. Außerdem ist die Windkraftanlage 6 dadurch sehr gut im Boden verankert.

Ferner ist hier bei 22 dargestellt, dass die Windkraftanlage 6 direkt mit der Wasserpumpe 3 verbunden ist. Bevorzugt ist hierzu ein nicht näher gezeigte Winkelgetriebe vorgesehen.

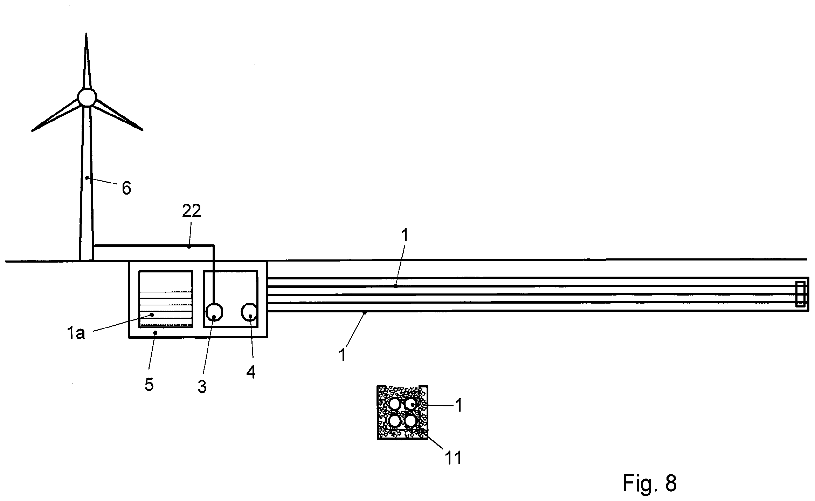

Figur 8 ist eine erfindungsgemässe schematische Darstellung einer Energie-Speicherung mit Pipeline-Rohren oder hochdruckfesten, betonumhüllten Druckwasserbehälter-Rohren, die horizontal in der Erde verlegt sind. Die Zeichnung zeigt ebenfalls eine Einzel-Windturbine mit Direktantrieb der Wasserhochdruckpumpe durch das Windrad. Der Betonunterbau mit Pumpe und Wassertank dient gleichzeitig als Fundament für den Windturbinenturm. Der Hohlraum des Turms kann als druckfester Hohlraum für die Pumpwasserdruck- Luftdruck- Energiespeicherung genutzt werden.

Natürlich ist im Rahmen der Erfindung auch daran gedacht, nicht nur ein Windrad, sondern die Windräder eines ganzen Windparks mit einer erfindungsgemäßen Energierückgewinnungsanlage zu verbinden.

### Bezugszeichenliste

| | | | | | |
|---|---|---|---|---|---|
| 1 | Druckwasserbehälter | 34 | | 67 | |
| 2 | Druckluftbehälter | 35 | | 68 | |
| 3 | Wasserpumpe | 36 | | 69 | |
| 4 | Turbine | 37 | | 70 | |
| 5 | Vorratsbehälter | 38 | | 71 | |
| 6 | Wind-/Solarenergie | 39 | | 72 | |
| 7 | Netz | 40 | | 73 | |
| 8 | Reduzierventil | 41 | | 74 | |
| 9 | Sicherheitsventil | 42 | | 75 | |
| 10 | Steuerung | 43 | | 76 | |
| 11 | Betonstahlbehälter | 44 | | 77 | |
| 12 | Armierung | 45 | | 78 | |
| 13 | Haus | 46 | | 79 | |
| 14 | Tunnel | 47 | | | |
| 15 | Wasserfilter | 48 | | | |
| 16 | See | 49 | | | |
| 17 | Schliessventil | 50 | | | |
| 18 | Speicherrohr | 51 | | | |
| 19 | Speicherrohr | 52 | | | |
| 20 | Zwischenwand | 53 | | | |
| 21 | Abschlussplatten | 54 | | | |
| 22 | direkte Verbindung | 55 | | | |
| 23 | Überdruckventil | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren für eine kombinierte Pumpwasserdruck-Druckluft-Energiespeicherung mit konstantem Turbinen-Wasserdruck, wobei mit der zu speichernden Energie ein flüssiges Medium, insbesondere Wasser, in einen druckfesten, luftdichten Hohlraum, insbesondere einen Druckwasserbehälter (1 - 1.5) gepumpt wird, sodass ein steigender Mediumspiegel kolbenartig ein im Druckwasserbehälter (1 - 1.5) befindliches Gas, insbesondere Luft, bis zur Mediumbefüllung komprimiert und dieses durch eine Verbindungsleitung in einen Druckgasbehälter (2 - 2.5) presst und mit einem Sperrventil (17.2) abschliesst, sodass die Energie in dem Druckgas gespeichert wird,
**dadurch gekennzeichnet,**
**dass** die Energie in der Druckluft bis zum Zeitpunkt der Energierückgewinnung durch Zuführung der energiegespeicherten Druckluft durch eine zweite Verbindungsleitung zum Druckwasserbehälter (1 - 1.5) mit geöffneten Schliessventilen (17.3, 17.4) und mit dazwischen angeordnetem Luftdruckreduzierventil (8), welches die hochkomprimierte Druckluft druckreduziert in den gefüllten Druckwasserbehälter (1 - 1.5) leitet und den Wasserdruck für den Antrieb von z.B. Turbinen auf konstantem Druckniveau des im Reduzierventil eingestellten Arbeitsdrucks aufrechterhält, aufrechterhalten wird.

2. Anlage für eine kombinierte Pumpwasserdruck-Druckluft-Energiespeicherung mit konstantem Turbinen-Wasserdruck, wobei die Anlage einen druckfesten, luftdichten Hohlraum, eine Verbindungsleitung, einen Druckgasbehälter (2-2.5), und ein Sperrventil (17.2) aufweist, wobei mit der zu speichernden Energie ein flüssiges Medium, insbesondere Wasser, in den druckfesten, luftdichten Hohlraum, insbesondere einen Druckwasserbehälter (1 - 1.5) pumpbar ist, sodass ein steigender Mediumspiegel kolbenartig ein im Druckwasserbehälter (1 - 1.5) befindliches Gas, insbesondere Luft, bis zur Mediumbefüllung komprimiert und dieses durch die Verbindungsleitung in den Druckgasbehälter (2 - 2.5) presst und mit dem Sperrventil (17.2) abschliesst, sodass die Energie in dem Druckgas speicherbar ist, **dadurch gekennzeichnet, dass** die Anlage weiterhin eine zweite Verbindungsleitung, Schliessventilen (17.3, 17.4) und ein Lufdruckventil aufweist, und dass die Energie in der Druckluft bis zum Zeitpunkt der Energierückgewinnung durch Zuführung der energiegespeicherten Druckluft durch die zweite Verbindungsleitung zum Druckwasserbehälter (1 - 1.5) mit den geöffneten Schliessventilen (17.3, 17.4) und mit dem dazwischen angeordnetem Luftdruckreduzierventil (8), welches die hochkomprimierte Druckluft druckreduziert in den gefüllten Druckwasserbehälter (1 - 1.5) leitet und den Wasserdruck für den Antrieb von z.B. Turbinen auf konstantem Druckniveau des im Reduzierventil eingestellten Arbeitsdrucks aufrechterhält, aufrechterhaltbar ist.

3. Anlage nach Anspruch 2, **dadurch gekennzeichnet, dass** dem Druckwasserbehälter (1 -1.5) eine von einer Energie versorgte Hochdruck-Wasserpumpe (3) vorgeschaltet ist und der Druckwasserbehälter (1 -1.5)mit dem Druckgasbehälter (2) in kommunizierender Verbindung steht und dieser Druckgasbehälter ein geringeres Volumen als der Druckwasserbehälter (1 - 1,5) aufweist.

4. Anlage nach Anspruch 3, **dadurch gekennzeichnet, dass** der Druckwasserbehälter (1 - 1.5) rohrförmig ausgebildet ist und zur Dämmung von radialen Druckkräfte mit einer spiralringförmigen und zwei eine axial aufnehmende Kraft aufnehmenden Rohrabschlüsse (21) verbindenden, längs des Rohres verlegten Beton-Stahlarmierung (12) versehen ist.

5. Anlage nach Anspruch 3 oder 4, **dadurch gekennzeichnet, dass** der Druckwasserbehälter (1 - 1.5) aus einem an beiden Enden dicht verschlossenen Pipeline-Rohr besteht.

6. Anlage nach wenigstens einem der Ansprüche 3-5, **dadurch gekennzeichnet, dass** die Speicherflüssigkeit aus einer Beimischung zum Wasser oder auch aus einer andern Flüssigkeit als Wasser, z.B. aus Hydraulikoel für kleine Speicher - Anlagen, z.B. für Fahrzeuge, besteht.

7. Anlage nach wenigstens einem der Ansprüche 3-6, **dadurch gekennzeichnet, dass** für eine Überdrucksicherung und Ladung und Entladung des Druckwasserspeichers (1 - 1.5) erforderliche Komponenten sowie eine Wassermengen-Regulierung, für die Drehzahl- und Leistungsregulierung der Turbine (4) mittels Ventilen (8, 9, 17) und sämtliche Steuer- und Überwachungsorgane rechner- und prozessgesteuert sind.

8. Anlage nach wenigstens einem der Ansprüche 3-7, **dadurch gekennzeichnet, dass** eine Überdrucksicherung von mindestens zwei unabhängigen Systemen sichergestellt wird, wobei mit einem Notschalter das Gas im Druckgasbehälter (2 - 2.5) durch ein Rohr nach oben sofort entleert werden kann und die Anlage in kurzer Zeit ohne Wasserentleerung drucklos gemacht ist.

9. Anlage nach wenigstens einem der Ansprüche 3-8, **dadurch gekennzeichnet, dass** bei einer Ausgangsöffnung des Druckwasserbehälters (1 - 1.5) ein Wassersperrventil (9) angebracht ist, damit kein Wasser vom Druckwasserbehälter in den Druckgasbehälter (2 - 2.5) gelangen kann.

10. Anlage nach wenigstens einem der Ansprüche 3-9, **dadurch gekennzeichnet, dass** zwei oder mehr Speicheranlagen (1.1, 1.2) für wechselseitigen Betrieb von Energiespeicherung und Energierückgewinnung mit einem gemeinsamen Ausgleichs-Wasserbecken (5) oder Wasserreservoir vorgesehen sind.

11. Anlage nach wenigstens einem der vorhergehenden Ansprüche, **dadurch gekennzeichnet, dass** eine Wasserzuführung in dem Druckwasserbehälter (1-1.5) von oben verteilt erfolgt, wobei das Wasser durch eine sich erwärmende Luft plätschert und diese abkühlt.

12. Anlage nach Anspruch 11, **dadurch gekennzeichnet, dass** die Zuführung des Wassers über ein gelochtes Rohr erfolgt.

13. Anlage nach wenigstens einem der vorhergehenden Ansprüche, **dadurch gekennzeichnet, dass** eine durch die Luftkompression entstehende Wärme vom Wasser aufgenommen wird und dazu dient, eine durch Druckminderung im Reduzierventil (8) entstehende Kälte auszugleichen.

14. Anlage nach wenigstens einem der vorhergehenden Ansprüche, **dadurch gekennzeichnet, dass** die Hochdruck-Wasserpumpe (3) direkt über eine entsprechende Verbindung (22) mit einer Windkraftanlage (6) verbunden ist.

15. Anlage nach Anspruch 14, **dadurch gekennzeichnet, dass** in die direkte Verbindung (22) ein Winkelgetriebe eingeschaltet ist.

## Claims

1. A method for combined pump-water pressure/compressed-air energy storage with a constant turbine water pressure, wherein with the energy which is to be stored a liquid medium, in particular water, is pumped into a pressure-resistant airtight cavity, in particular a pressurised-water container (1 - 1.5), so that a rising medium level in piston-like manner compresses a gas located in the pressurised-water container (1 - 1.5), in particular air, until it is filled with medium, and presses the gas through a connecting line into a pressurised-gas container (2 - 2.5) and closes it off with a shutoff valve (17.2), so that the energy is stored in the compressed gas,
**characterised in that**
the energy in the compressed air is maintained up to the time of the energy recovery by supplying the energy-stored compressed air through a second connecting line to the pressurised-water container (1 - 1.5) with opened closing valves (17.3, 17.4) and with an air-pressure reducing valve (8) arranged therebetween which passes the highly-compressed compressed air in pressure-reduced manner into the filled pressurised-water container (1 - 1.5) and maintains the water pressure for driving e.g. turbines at a constant pressure level of the operating pressure which is set in the reducing valve.

2. An installation for combined pump-water pressure/compressed-air energy storage with a constant turbine water pressure, wherein the installation has a pressure-resistant airtight cavity, a connecting line, a pressurised-gas container (2 - 2.5) and a shutoff valve (17.2), wherein with the energy to be stored a liquid medium, in particular water, can be pumped into the pressure-resistant airtight cavity, in particular a pressurised-water container (1 - 1.5), so that a rising medium level in piston-like manner compresses a gas located in the pressurised-water container (1 - 1.5), in particular air, until it is filled with medium and presses the gas through the connecting line into the pressurised-gas container (2 - 2.5) and closes it off with the shutoff valve (17.2), so that the energy can be stored in the compressed gas, **characterised in that** the installation furthermore has a second connecting line, closing valves (17.3, 17.4) and an air-pressure valve, and **in that** the energy in the compressed air can be maintained up to the time of the energy recovery by supplying the energy-stored compressed air through the second connecting line to the pressurised-water container (1 - 1.5) with the opened closing valves (17.3, 17.4) and with the air-pressure reducing valve (8) arranged therebetween which passes the highly-compressed compressed air in pressure-reduced manner into the filled pressurised-water container (1 - 1.5) and maintains the water pressure for driving e.g. turbines at a constant pressure level of the operating pressure which is set in the reducing valve.

3. An installation according to Claim 2, **characterised in that** the pressurised-water container (1 - 1.5) is preceded by a high-pressure water pump (3) supplied with energy, and the pressurised-water container (1 - 1.5) is in a communicating connection with the pressurised-gas container (2), and this pressurised-gas container has a smaller volume than the pressurised-water container (1 - 1.5).

4. An installation according to Claim 3, **characterised in that** the pressurised-water container (1 - 1.5) is designed to be tubular, and for damping radial pressure forces is provided with a helical concrete steel reinforcement (12) laid along the pipe and connecting two pipe closures (21) which absorb an axially absorbing force.

5. An installation according to Claim 3 or 4, **characterised in that** the pressurised-water container (1 - 1.5) consists of a pipeline pipe which is closed tightly at both ends.

6. An installation according to at least one of Claims 3 - 5, **characterised in that** the storage liquid consists of an addition to the water or alternatively of a liquid other than water, e.g. of hydraulic oil for small storage systems, e.g. for vehicles.

7. An installation according to at least one of Claims 3 - 6, **characterised in that** components necessary for overpressure protection and charging and discharging of the pressurised-water storage means (1 - 1.5), and a water amount regulating means, for regulating the rotational speed and output of the turbine (4) by means of valves (8, 9, 17) and all the control and monitoring elements are computer-controlled and process-controlled.

8. An installation according to at least one of Claims 3 - 7, **characterised in that** overpressure protection of at least two independent systems is ensured, wherein the gas in the pressurised-gas container (2 - 2.5) can be immediately vented upwards through a pipe with an emergency switch and the installation is depressurised without emptying water in a short time.

9. An installation according to at least one of Claims 3 - 8, **characterised in that** in the case of an exit opening of the pressurised-water container (1 - 1.5) a water shutoff valve (9) is attached so that no water can pass from the pressurised-water container into the pressurised-gas container (2 - 2.5).

10. An installation according to at least one of Claims 3 - 9, **characterised in that** two or more storage installations (1.1, 1.2) for alternately operating energy storage and energy recovery are provided with a common equalising water basin (5) or water reservoir.

11. An installation according to at least one of the preceding claims, **characterised in that** a supply of water takes place distributed from above in the pressurised-water container (1 - 1.5), with the water splashing through air being heated, and cooling it.

12. An installation according to Claim 11, **characterised in that** the supplying of the water takes place via a perforated pipe.

13. An installation according to at least one of the preceding claims, **characterised in that** a heat resulting from the air compression is absorbed by the water and serves to compensate for cold resulting from pressure reduction in the reducing valve (8).

14. An installation according to at least one of the preceding claims, **characterised in that** the high-pressure water pump (3) is connected directly to a wind power installation (6) via a corresponding connection (22).

15. An installation according to Claim 14, **characterised in that** an angular gear is inserted into the direct connection (22).

## Revendications

1. Procédé de stockage d'énergie combiné à air comprimé et à pression d'eau pompée à pression d'eau de turbine constante, par l'énergie à stocker étant pompé un fluide liquide, en particulier de l'eau, vers un espace vide étanche à l'air résistant à la pression, en particulier un réservoir d'eau sous pression (1 - 1.5) de sorte qu'un niveau de fluide croissant comprime un gaz, en particulier de l'air, se trouvant dans le réservoir d'eau sous pression (1 - 1.5), à la manière d'un piston, jusqu'au remplissage de fluide et le presse à travers un conduit de connexion dans un réservoir à gaz comprimé (2 - 2,5) et le ferme par un clapet de retenue (17.2), de sorte que l'énergie soit stockée dans le gaz comprimé,
**caractérisé par le fait que** l'énergie dans l'air comprimé est maintenue jusqu'au moment de la récupération d'énergie par amenée de l'air comprimé à énergie stockée à travers une deuxième conduite de connexion vers le réservoir de fluide sous pression (1 - 1.5) à soupapes de fermeture ouvertes (17.3, 17.4) et à soupape de réduction de pression d'air (8) disposée entre ces dernières, laquelle conduit l'air comprimé hautement comprimé de manière réduite en pression vers le réservoir d'eau sous pression (1 - 1.5) rempli et maintient la pression d'eau pour l'entraînement par exemple de turbines à un niveau de pression constant de la pression de travail réglée dans la soupape de réduction.

2. Installation de stockage d'énergie combiné à air comprimé et à pression d'eau pompée à pression d'eau de turbine constante, l'installation présentant un espace vide étanche à l'air résistant à la pression, une conduite de connexion, un réservoir à gaz comprimé (2 - 2,5) et un clapet de retenue (17.2), par l'énergie à stocker pouvant être pompé un fluide liquide, en particulier de l'eau, vers l'espace vide étanche à l'air résistant à la pression, en particulier le réservoir d'eau sous pression (1 - 1.5), de sorte qu'un niveau de fluide croissant comprime un gaz, en particulier de l'air, se trouvant dans le réservoir d'eau sous pression (1 - 1.5), à la manière d'un piston, jusqu'au remplissage de fluide et le presse à travers un conduit de connexion dans un réservoir à gaz comprimé (2 - 2,5) et le ferme par un clapet de retenue (17.2), de sorte que l'énergie puisse être stockée dans le gaz comprimé,
**caractérisé par le fait que**
l'installation comporte par ailleurs une deuxième conduite de connexion, des soupapes de fermeture (17.3, 17.4) et une soupape de pression d'air, et que l'énergie dans l'air comprimé peut être maintenue jusqu'au moment de la récupération d'énergie par amenée de l'air comprimé à énergie stockée à travers la deuxième conduite de connexion vers le réservoir de fluide sous pression (1 - 1.5) à soupapes de fermeture ouvertes (17.3, 17.4) et à soupape de réduction de pression d'air (8) disposée entre ces dernières, laquelle conduit l'air comprimé hautement comprimé de *manière* réduite en pression vers le réservoir d'eau sous pression (1 - 1.5) rempli et maintient la pression d'eau pour l'entraînement par exemple de turbines à un niveau de pression constant de la pression de travail réglée dans la soupape de réduction.

3. Installation selon la revendication 2, **caractérisée par le fait qu'**en amont du réservoir d'eau sous pression (1-1 0,5) est connectée une pompe à eau à haute pression (3) alimentée en énergie et que le réservoir d'eau sous pression (1 -1.5) est connecté en communication avec le réservoir de gaz comprimé (2) et que ce réservoir de gaz sous pression présente un plus petit volume que le réservoir d'eau sous pression (1 - 1.5).

4. Installation selon la revendication 3, **caractérisée par le fait que** le réservoir d'eau sous pression (1 - 1.5) est réalisé tubulaire et est pourvu, pour l'isolation de forces de compression radiales d'une armature de béton et acier (12) en forme de bague en spirale et connectant deux terminaisons de tuyau (21) recevant une force axiale, disposée le long du tuyau.

5. Installation selon la revendication 3 ou 4, **caractérisée par le fait que** le réservoir d'eau sous pression (1 - 1.5) consiste en un tuyau pipeline obturé hermétiquement aux deux extrémités.

6. Installation selon au moins l'une des revendications 3 à 5, **caractérisée par le fait que** le liquide de stockage consiste en un mélange ajouté à l'eau, ou également en un liquide autre que de l'eau, par exemple, en huile hydraulique pour de petites installations de stockage, par exemple pour véhicules.

7. Installation selon au moins l'une des revendications 3 à 6, **caractérisée par le fait que**, pour une protection contre la surpression et le chargement et le déchargement du réservoir d'eau sous pression (1 - 1.5), les composants nécessaires ainsi qu'une régulation de la quantité d'eau, pour le réglage de vitesse et de puissance de la turbine (4) au moyen de soupapes (8, 9, 17) et tous les organes de commande et de surveillance sont commandés par ordinateur et le processus.

8. Installation selon au moins l'une des revendications 3 à 7, **caractérisée par le fait qu'**une protection contre la surpression est assurée par au moins deux systèmes indépendants, par un interrupteur de secours le gaz dans le réservoir à gaz sous pression (2 - 2.5) pouvant immédiatement être vidé à travers un tube vers le haut et l'installation peut en un court laps de temps être dépressurisée sans vidange de l'eau.

9. Installation selon au moins l'une des revendications 3 à 8, **caractérisée par le fait qu'**à un orifice de sortie du réservoir d'eau sous pression (1 - 1.5) est placée une soupape d'arrêt d'eau (9) pour qu'il ne puisse pas arriver d'eau du réservoir d'eau sous pression dans le réservoir à gaz sous pression (2 - 2.5).

10. Installation selon au moins l'une des revendications 3 à 9, **caractérisée par le fait qu'**il est prévu deux ou plusieurs installations de stockage (1.1, 1.2) pour un fonctionnement réciproque du stockage d'énergie et de la récupération d'énergie avec un bassin d'eau (5) ou réservoir d'eau d'équilibrage commun.

11. Installation selon au moins l'une des revendications précédentes, **caractérisée par le fait qu'**une alimentation d'eau dans le réservoir d'eau sous pression (1 à 1,5) a lieu de manière distribuée depuis le haut, l'eau s'écoulant par de l'air qui se réchauffe et refroidissant ce dernier.

12. Installation selon la revendication 11, **caractérisée par le fait que** l'alimentation de l'eau a lieu à travers un tube perforé.

13. Installation selon au moins l'une des revendications précédentes, **caractérisée par le fait qu'**une chaleur produite par la compression d'air est absorbée par l'eau et sert à compenser un froid résultant d'une réduction de pression dans la soupape de réduction (8).

14. Installation selon au moins l'une des revendications précédentes, **caractérisée par le fait que** la pompe à eau à haute pression (3) est connectée directement par une connexion (22) correspondant à une installation d'énergie éolienne (6).

15. Installation selon la revendication 14, **caractérisée par le fait que** dans la connexion directe (22) est connecté un engrenage angulaire.
